# EUROPÄISCHE PATENTSCHRIFT

(11) **EP 1 535 794 B1**
(45) Veröffentlichungstag und Bekanntmachung des Hinweises auf die Patenterteilung: **22.04.2009**
(21) Anmeldenummer: 04026408.7
(22) Anmeldetag: 06.11.2004
(51) Int. Cl.: B60N 2/48

(54) **Kopfstütze für Kraftfahrzeugsitze**
Headrest for automobile seats
Appui-tête pour sièges d'automobile

(30) Priorität: 26.11.2003 DE 10355773
(43) Veröffentlichungstag der Anmeldung: 01.06.2005
(73) Patentinhaber: GRAMMER AG, 92224 Amberg (DE)
(72) Erfinder: Schlierf, Manfred, 92224 Amberg (DE); Meier, Josef, 92272 Freudenberg (DE); Wallinger, Thomas, 92439 Bodenwöhr (DE)
(74) Vertreter: Ostriga, Sonnet, Wirths & Roche

(56) Entgegenhaltungen:
- EP-A- 0 974 484
- DE-C1- 10 138 248
- DE-U1- 20 021 127

## Beschreibung

Die Erfindung betrifft eine Kopfstütze für Kraftfahrzeugsitze entsprechend dem Oberbegriff des Anspruchs 1. Eine solche Kopfstütze ist Gegenstand der EP 0 974 484 B1. Mit der bekannten Kopfstütze wird der Vorteil erzielt, dass das die kopfstützenseitige Kopfanlagefläche bildende Kopfanlageteil insbesondere im Crashfalle durch die Energieentlasfung des zuvor gespannten mechanischen Federspeichers nach vorn zum Hinterkopf des Fahrzeuginsassen bewegt wird. Auf diese Weise können im Crashfalle schädliche zusätzliche Beschleunigungswege des Kopfes vermieden werden.

Die besonderen Merkmale der Kopfstütze gemäß der EP 0 974 484 B1 bestehen darin, dass der mechanische Federspeicher in einem zentralen Hohlraum zweier teleskopierend ineinander angeordneter und relativ zueinander beweglicher zylindrischer rohrartiger Körper angeordnet ist. Eine unbeabsichtigte Einfahrbewegung des Kopfanlageteils in dessen Ausgangsposition hinein verhindert eine Rücklaufsperre, welche aus zwei die Rücklaufbewegung verhindernden ausfederbaren Hebeln besteht.

Die bekannte Kopfstütze weist den Vorteil einer kompakten einfachen Bauform auf.

Von der US 2,973,029 ist eine Kopfstütze bekannt, deren Polsterträger an einer etwa stößelartigen Tragstange befestigt ist. Im Falle einer Belastung der Kopfanlagefläche dringt die Kopfstütze mit ihrer Tragstange entgegen der Rückstellkraft einer Schraubendruckfeder in einen sitzlehnenseitigen Führungsraum ein. Die Tragstange weist eine ratschenartige Verzahnung auf, in welche ein in dem sitzlehnenseitigen Führungsraum angeordneter Sperrstift eingreifen und so die Kopfstütze in ihrer eingefahrenen Lage festhalten kann.

Die von der US 2,973,029 her bekannte Anordnung kann daher nicht als crashaktive Kopfstütze bezeichnet werden.

Von der US 4,278,291 ist eine Kopfstütze für Kraftfahrzeugsitze bekannt, deren beweglichem Teil ein lineares Richtgesperre mit einem handbetätigbaren Sperrstift zugeordnet ist. Eine Schraubendruckfeder belastet den beweglichen Teil der Kopfstützenanordnung ständig im Ausfahrsinne. Wenn der Fahrgast eine für ihn ergonomisch passende Kopfposition erlangen will, muss er den Sperrstift betätigen und den beweglichen Teil der Kopfstützenanordnung durch Kopfanlage im Einfahrsinne belasten. Auch die von der US 4,278,291 bekannte Anordnung ist als crashaktive Kopfstütze nicht verwendbar.

Von der DE 101 38 248 C1 ist eine crashaktive Kopfstütze bekannt, bei welcher die Ausstellbewegung des Kopfanlageteils mittels eines Lenkergetriebes erfolgt. Mit dem Lenkergetriebe ist ein lineares Richtgesperre kombiniert, welches als Rücklaufsperre funktioniert.

Von der DE 200 21 127 U1 (vgl. Fig. 12) ist eine Kopfstütze bekannt, bei welcher eine federunterstützte Ausfahrbewegung der Kopfstütze dadurch gehemmt wird, dass bei Kopfanlage zwei Zahnstangen in Sperreingriff miteinander versetzt werden.

Ausgehend von der eingangs beschriebenen crashaktiven Kopfstütze gemäß der EP 0 974 484 B1, liegt der Erfindung die Aufgabe zugrunde, eine kompakt aufgebaute crashaktive Kopfstütze zu schaffen, welche bei einfacher Bedienung und mit verhältnismäßig einfachen Mitteln nach einer insbesondere crashbedingten Auslösung wieder in ihren Ausgangszustand (Ruhezustand) zurückversetzt werden kann.

Gemeinsam mit den Merkmalen des Oberbegriffs des Anspruchs 1 wird diese Aufgabe mit dessen Kennzeichnungsmerkmalen dadurch gelöst, dass das Führungsteil eine langgestrecktes zylindrisches Bauteil ist, dass auf dem Führungsteil ein das Kopfanlageteil mindestens mittelbar tragendes Schlittenbauteil zwangsgeführt ist, dass der Federspeicher sich entlang des Führungsteils zwischen dem Schlittenbauteil und einem hauptkörperseitigen Widerlager erstreckt, dass das Schlittenbauteil einen Sperrzahn bildet, welcher mit einem am oberen Ende der Ausfahrstrecke des Schlittenbauteils angeordneten Gegensperrzahn, eine lösbare Rücklaufsperre bildet, zusammenwirkt, und dass das Schlittenbauteil ein primäres Kupplungselement aufweist, welches in der Ausgangsposition des Schlittenbauteils, die lösbare Kupplungsvorrichtung bildend, mit einem vom Hauptkörper gehaltenen sekundären Kupplungselement zusammenwirkt.

Für den Fall, dass die erfindungsgemäße Kopfstütze durch einen Crashfall aktiviert worden ist, kann das Schlittenbauteil nach Herauslösen des Sperrzahns aus seinem Eingriff mit dem Gegensperrzahn und durch Niederdrücken des Kopfanlageteils in seine Ausgangsposition zurückversetzt (zurückverschoben) werden, wobei das Schlittenbauteil entlang dem Führungsteil gleitet und mit seinem primären Kupplungselement mit dem hauptkörperseitigen sekundären Kupplungselement eine lösbare Kupplungsverbindung eingeht.

Weitere erfindungsgemäße Vorteile ergeben sich aus den Unteransprüchen.

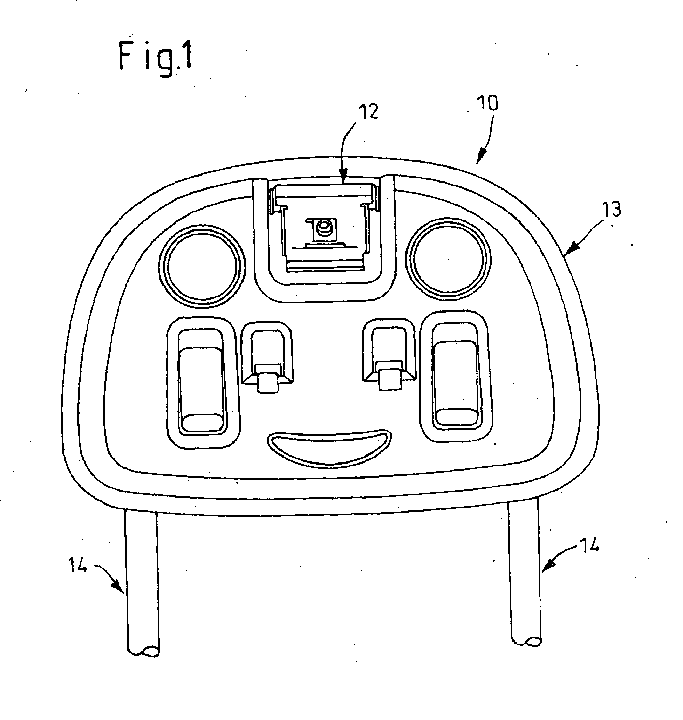

In den Zeichnungen ist ein bevorzugtes Ausführungsbeispiel entsprechend der Erfindung dargestellt, es zeigt
Fig. 1 eine Ansicht einer Kopfstütze für Kraftfahrzeugsitze mit Blickrichtung auf das Kopfanlageteil nach vorheriger Entfernung des Kopfpolsters,
Fig. 2 die Kopfstütze gemäß Fig. 1 nach Entfernen des Kopfanlageteils,
Fig. 3 einen mehr schematischen Querschnitt durch die Kopfstütze etwa entsprechend der in Fig. 2 mit III-III bezeichneten Schnittlinie,
Fig. 4 die Kopfstütze gemäß Fig. 2, die dort in ihrer Ausgangsposition (Ruheposition) gezeigt ist, nunmehr in ihrer aktivierten Position,

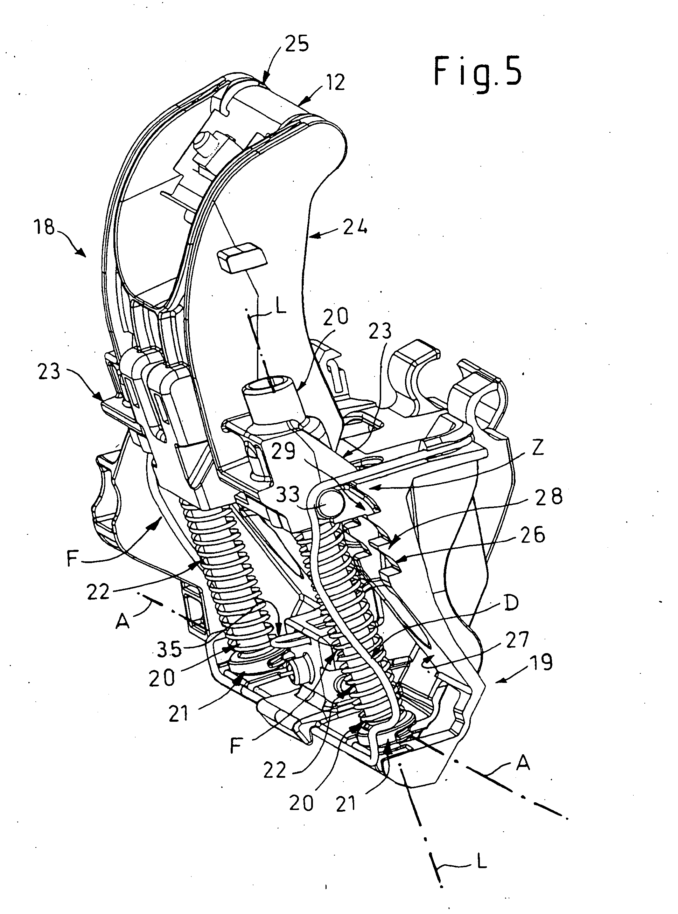

Fig. 5 den Aktivierungsmechanismus gemäß Fig. 4 als isolierte Baugruppe,
Fig. 6 die Baugruppe gemäß Fig. 5 in ihrer Ausgangsposition (Ruheposition),
Fig. 7 eine Kupplungsvorrichtung in ihrer Sperrposition und
Fig. 8 die Kupplungsvorrichtung gemäß Fig. 7 in ihrer Löseposition.

In den Zeichnungen ist eine Kopfstütze für Kraftfahrzeugsitze insgesamt mit der Bezugsziffer 10 bezeichnet.

Die Kopfstütze 10 weist einen Hauptkörper 11 und ein am Hauptkörper 11 mittels einer Klemmlagerschelle 12 neigeverstellbar befestigtes Kopfanlageteil 13 auf. Am Hauptkörper 11 ist ein zwei Einsteckenden 14 mit Verstellkerben 15 aufweisender Tragstangenbügel 16 zur Verstellhalterung in einer nicht dargestellten Lehne eines Kraftfahrzeugsitzes befestigt.

In der Rückenplatte 17 des Hauptkörpers 11 ist der eine komplette Baugruppe bildende eigentliche crashaktive Teil 18 als Bestandteil des Hauptkörpers 11 befestigt.

Jedes crashaktive Teil 18 weist einen Grundkörper 19 auf, auf welchem zwei gerade rohrförmige Führungsteile 20 kreiszylindrischen Querschnitts mit Fußteilen 21 befestigt sind. Jedes Führungsteil 20 stellt ein mit seinem Fußteil 21 am Hauptkörper 11, d.h. an dessen Grundkörper 19, stehend gehaltenes Bauteil dar. Das Fußteil 21 des Führungsteils 20 ist gemeinsam mit letzterem schwenkbar gelagert, wobei sich die schematisch dargestellte Schwenklagerachse A horizontal sowie quer zur Längsachse L des jeweiligen Führungsteils 20 erstreckt.

Jedes Führungsteil 20 ist von einer einen Federspeicher bildenden Schraubendruckfeder 22 koaxial umgeben.

Auf jedem Führungsteil 20 ist ein Schlittenbauteil 23 gleitbar angeordnet. Beide Schlittenbauteile 23 sind über ein Brückenbauteil 24 im wesentlichen starr miteinander verbunden. Das Brückenbauteil 24 weist einen mittigen Achsbereich 25 auf, auf welchem die bereits erwähnte Klemmlagerschelle 12, die der neigeverstellbaren Befestigung des Kopfanlageteils 13 dient, angeordnet ist.

Zu beiden Seiten eines jeden Führungsteils 20 erstreckt sich je ein eine Steuerbahn S bildendes Steuerorgan 26. Jedes Steuerorgan 26 besitzt, etwa beginnend in der Höhe des Fußteils 21 des zugehörigen Führungsteils 20, zunächst eine nach vorn und unten divergierende Anlaufschräge 27. An die Anlaufschräge 27 schließen sich mehrere Zwischen-Gegensperrzähne 28 an, wobei der zuoberst angeordnete Gegensperrzahn mit Z bezeichnet ist.

Mit der Steuerbahn S wirkt jeweils ein vom Schlittenbauteil 23 gebildeter Sperrzahn 29 zusammen. Jedes Schlittenbauteil 23 verfügt deshalb entsprechend den beiden ihm zugeordneten Steuerorganen 26 über zwei Sperrzähne 29.

Jedes Schlittenbauteil 23 wird mittels Federrückstellkraft gegen die Steuerbahn S des zugehörigen Steuerorgans 26 gehalten. Dieses geschieht mittels einer Bügelfeder 30, welche mittels eines oberen Einspannbereichs 31 und mittels eines unteren Einspannbereichs 32 am Grundkörper 19 befestigt ist und dessen eigentliche Federbereiche mit F bezeichnet sind.

Jedes Schlittenbauteil 23 kontaktiert die jeweilige Druckseite D der Federbereiche F der Bügelfeder 30 mit einem Gleitkörper bzw. mit einer Führungsrolle 33.

Die Bügelfeder 30 stellt etwa am oberen Ende eines jeden Federbereichs F eine rechtwinklige Abbiegung 34 dar, welche, wenn die beiden Schlittenbauteile 23 ihre oberste Position eingenommen haben, für jedes Schlittenbauteil 23 eine Ausfahrbegrenzung bilden.

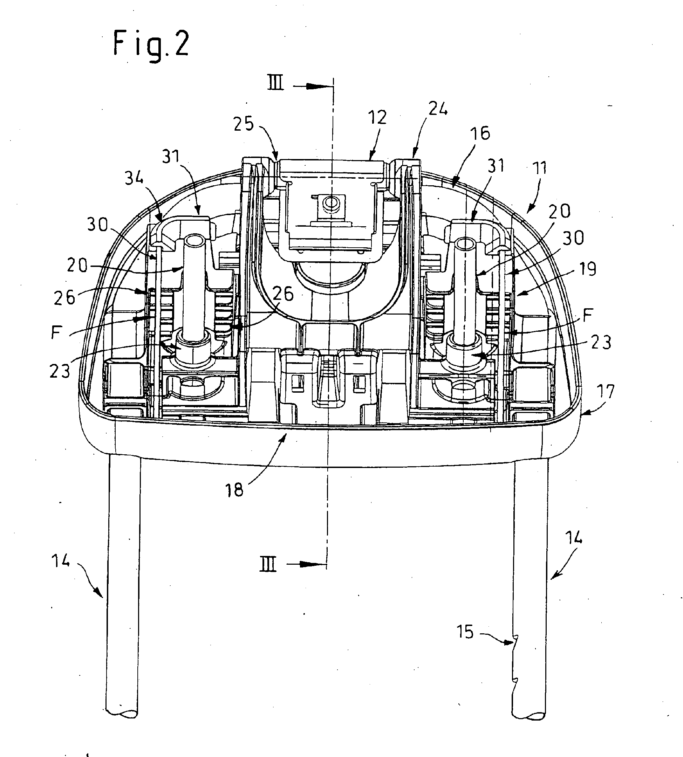

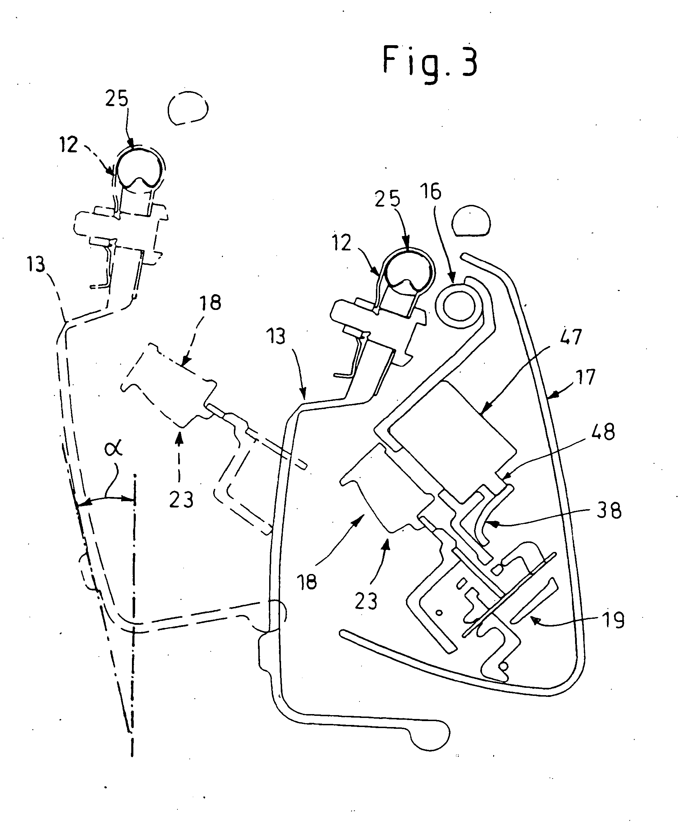

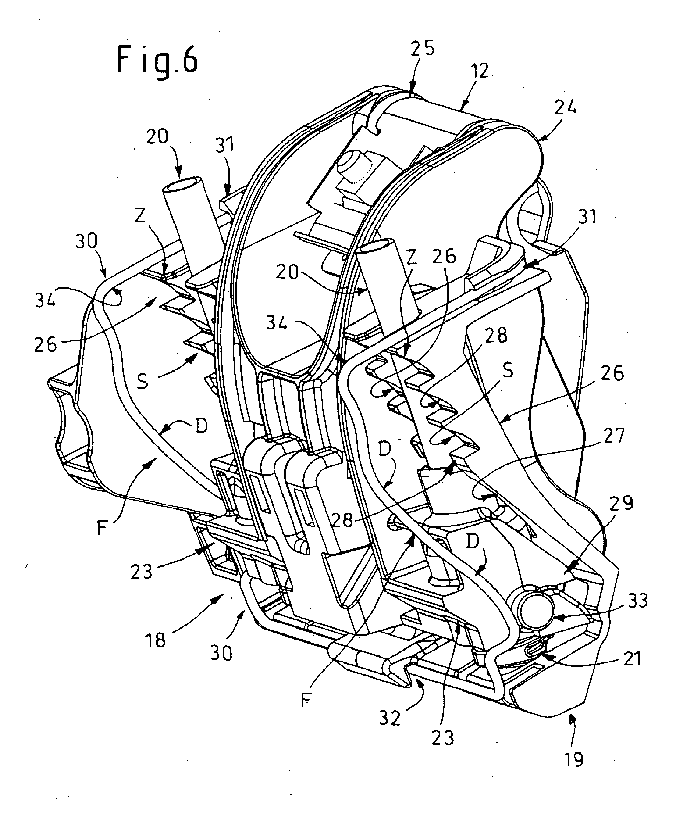

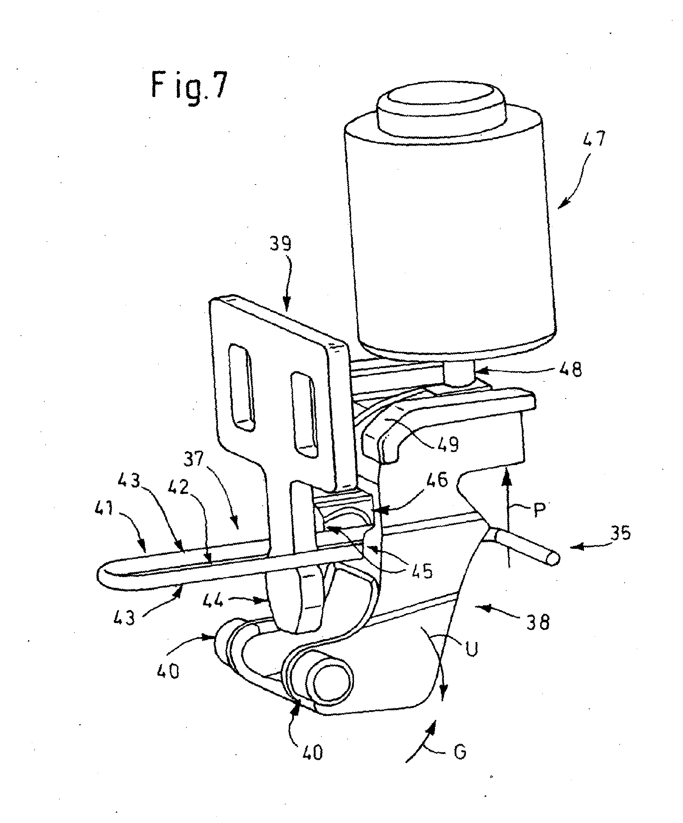

Jedem Schlittenbauteil 23 ist eine lösbare Kupplungsvorrichtung 35 zugeordnet, welche die Schlittenbauteile 23 in ihrer Ausgangs- bzw. Ruheposition (s. Fig. 2, Fig. 3 rechter Teil, Fig. 6, Fig. 7) festhält. Zur Verwirklichung der Kupplungsvorrichtung 35 sind unterschiedlich aufgebaute Ausführungsformen vorstellbar. Die im folgenden beschriebene Kupplungsvorrichtung 35 stellt daher nur ein Ausführungsbeispiel dar.

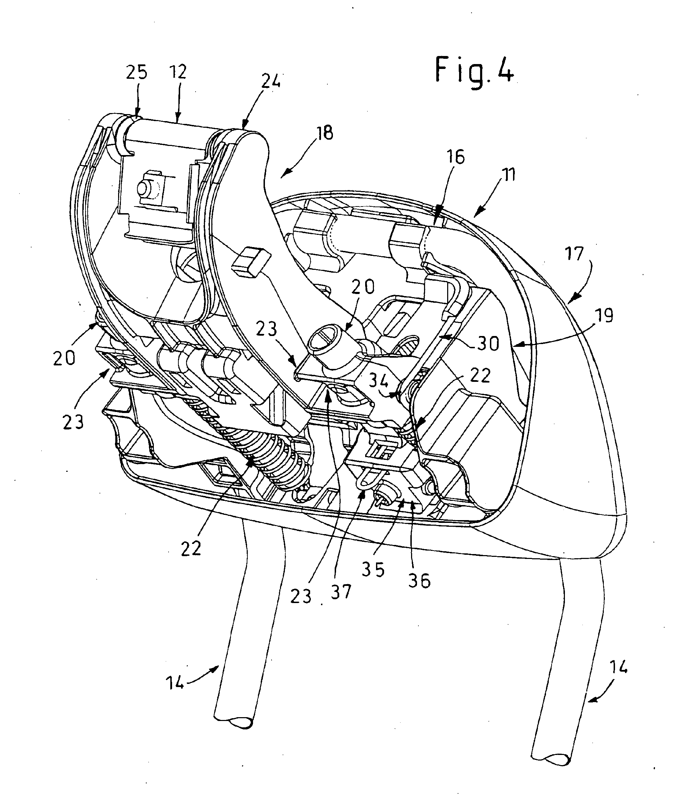

In Fig. 4 ist nur eine Kupplungsvorrichtung 35 teilweise sichtbar. Zur Kupplungsvorrichtung 35 gehört ein am Grundkörper 19 befestigtes Aufnahmeteil 36 zur Halterung eines etwa haarnadelförmig gekrümmten Kupplungs-Federbügels 37.

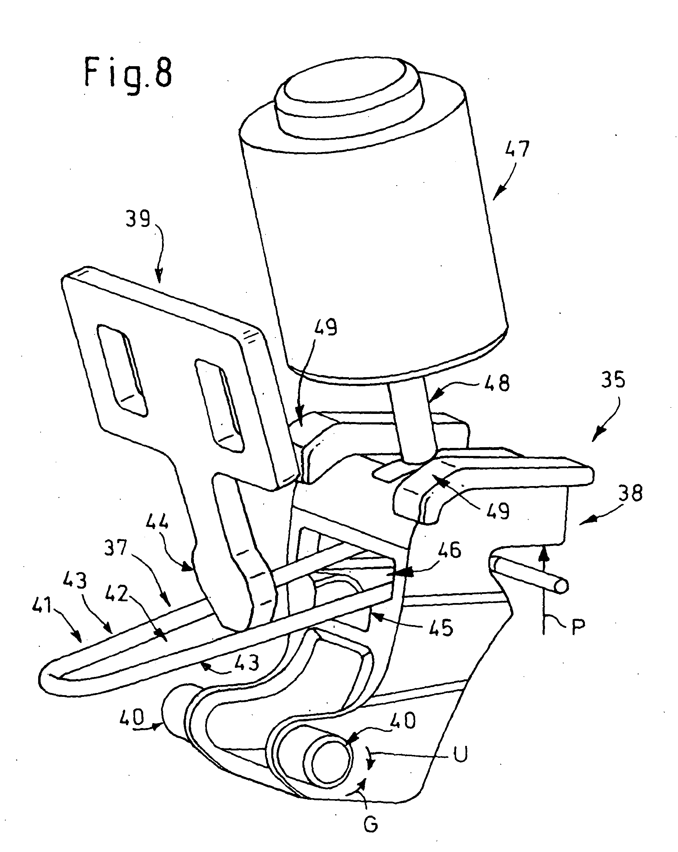

Zur Kupplungsvorrichtung 35, die in den Fig. 7 und 8 ohne das Aufnahmeteil 36 isoliert dargestellt ist, gehören außerdem eine Schaltwippe 38 und ein jeweils an einem Schlittenbauteil 23 befestigter Kupplungszapfen 39.

Die Schaltwippe 38 ist mittels zweier Lagerzapfen 40 im Grundkörper 19 schwenkgelagert. In dem Grundkörper 19 ist ― wie vorerwähnt ― mittels eines Aufnahmeteils 36 ebenfalls der haarnadelförmige Bügelbereich 41 des Kupplungs-Federbügels 37 gehalten, d.h. eingespannt.

In der Darstellung gemäß Fig. 7 weist der Spaltbereich 42 zwischen den beiden Federbügelschenkeln 43 des Kupplungs-Federbügels 37 seine geringste Öffnungsweite auf, so dass der etwa keulenartig erweiterte Bereich 44 des Kupplungszapfens 39 durch den verengten Spaltbereich 42 gemeinsam mit dem zugehörigen Schlittenbauteil 23 arretiert ist.

Der Kupplungs-Federbügel 37 ist so beschaffen, dass er bei Entlastung bestrebt ist, den Spaltbereich 42 durch Ausfedern zu erweitern. In der Geschlossenstellung der Kupplungsvorrichtung 35 gemäß Fig. 7 befinden sich die beiden Bügelschenkel 43 zwischen zwei diametral gegenüberliegenden Klemmbacken 45 der Schaltwippe 38.

Für den Fall, dass die Schaltwippe im Uhrzeigersinn U nach unten verschwenkt wird, gelangen die beiden Bügelschenkel 43 in den erweiterten Raum 46 der Schaltwippe 38: Der Spaltbereich 42 erweitert sich, die Kupplung 35 ist in ihre Lösestellung gelangt und das Schlittenbauteil 23 kann sich mit ihrem zugehörigen Kupplungszapfen 39 frei nach oben bewegen.

Die Schaltwippe 38 ist durch die Rückstellkraft P einer nicht dargestellten Feder ständig im Gegenuhrzeigersinne G belastet. Die Federrückstellkraft P ist größer als die im Öffnungssinne nach außen strebende Federkraft des Kupplungs-Federbügels 37. Demnach versucht die Schaltwippe 38 ständig, die beiden Schenkel 43 des Kupplungs-Federbügels 37 zwischen die beiden Klemmbacken 45, also in die Position des geringsten Spaltbereichs 42 zwischen den Schenkeln 43, hineinzuzwängen.

Im Crashfall erhält der am Grundkörper 19 befestigte Elektromagnet 47 ein Signal, worauf der Stößel 48 nach unten ausfährt und die Schaltwippe 38 im Uhrzeigersinn U entgegen der Federrückstellkraft P nach unten verschwenkt. Infolgedessen gelangen die beiden Schenkel 43 des Kupplungs-Federbügels 37 in den erweiterten Raum 46 der Schaltwippe 38: Der Spaltbereich 42 erweitert sich und der Kupplungszapfen 39 wird frei, so dass das zugehörige Schlittenbauteil 23 unter der Wirkung der sich entspannenden Schraubendruckfeder 22 nach oben gelangen kann.

Hierbei bewegen sich die Sperrzähne 29 der Schlittenbauteile 23 zunächst entlang der Anlaufschräge 27 der jeweiligen Steuerbahn S und werden dabei durch die Federbereiche F gegen die Steuerbahn S gehalten. Die Sperrzähne 29 bewegen sich sodann von Zwischen-Gegensperrzahn 28 zu Zwischen-Gegensperrzahn 28 bis zum obersten Gegensperrzahn Z.

Fig. 3 zeigt in schematischer Weise mit durchgezogenen Linien die Anordnung in ihrer Ruheposition und mit gestrichelten Linien in ihrer aktivierten ausgefahrenen Position.

In Verbindung mit Fig. 3 wird dabei auch deutlich, dass sich die Winkellage einiger Bauteile, wie in Fig. 3 anhand des Kopfanlageteils 13 verdeutlicht, ändert. Beim Überfahren der Anlaufschräge 27 kippen jene Bauteile, insbesondere die Führungsteile 20 mit den auf ihnen angeordneten Schlittenbauteilen 23 als Folge des Verlaufs der Steuerbahn S gewissermaßen nach vorn, und zwar um einen Winkel α , der etwa 10° betragen kann.

Für den Fall, dass eine Kopfanlage des Fahrgastes relativ früh erfolgt, ist gewährleistet, dass die Ausfahrbewegung der Schlittenbauteile 23 bereits im Bereich der Zwischen-Gegensperrzähne 28 endet.

Aus einer der oberen Stellungen der Schlittenbauteile 23 können diese von Hand auf folgende Weise in ihre unterste Ausgangs- bzw. Ruheposition zurückbewegt werden:

Wenn man das Kopfanlageteil 13 zur Bügelfeder 30 hin nach vorn zieht, geraten die Sperrzähne 29 außer Eingriff mit den Gegensperrzähnen Z bzw. mit den Zwischen-Gegensperrzähnen 28. Dabei schwenken das Brückenbauteil 24 und die damit starr verbundenen beiden Führungsteile 20 einschließlich der auf ihnen angeordneten Schlittenbauteile 23 entgegen der Rückstellkraft der Federbereiche F der Bügelfeder 30 um die Schwenklagerachse A nach vorn.

Auf diese Weise können beide Schlittenbauteile 23 nach unten bewegt werden. Dabei stoßen nicht dargestellte Steuerkanten des jeweiligen Schlittenbauteils 23 bei dessen Abwärtshub, dem Kupplungszapfen 39 vorauseilend, gegen Schrägflächen 49 der Schaltwippe 38, so dass diese im Uhrzeigersinn U verschwenkt wird und dabei die Schenkel 43 des Kupplungs-Federbügels 37, sich entspannend, in den erweiterten Raum 46 der Schaltwippe 38 gelangen.

Auf diese Weise kann der Kupplungszapfen 39 behinderungsfrei durch den Spaltbereich 42 des Kupplungs-Federbügels 37 hindurchfahren. Danach verlassen die Steuerkanten der Schlittenbauteile 23 die Schrägflächen 49, so dass die Schaltwippe 38 unter der Wirkung der Federrückstellkraft P im Gegenuhrzeigersinn G nach oben schwenken kann, wobei die Schenkel 43 zwischen die Klemmbacken 45, den Kupplungszapfen 39 festhaltend, in ihre Schließstellung geraten.

## Patentansprüche

1. Kopfstütze (10) für Kraftfahrzeugsitze, mit einem relativ zu einem Hauptkörper (11) der Kopfstütze (10) entlang einer im wesentlichen linearen Bewegungsrichtung beweglich bezüglich des Hauptkörpers (11) geführten, eine Kopfanlagefläche aufweisenden Kopfanlageteil (13), welches durch die Energieentlastung mindestens eines entgegen dem Ausfahrsinn des Kopfanlageteils (13) verspannbaren mechanischen Federspeichers (22) nach vorn zum Hinterkopf des Fahrzeuginsassen bewegbar ist, wobei für die im wesentlichen lineare Bewegung des Kopfanlageteils (13) ein mindestens eine geradlinige Führungsfläche aufweisendes Führungsteil (20) vorgesehen ist, und wobei eine eine unbeabsichtigte Einfahrbewegung des Kopfanlageteils (13) in dessen Ausgangsposition verhindernde Rücklaufsperre (29, Z) und eine das Kopfanlageteil (13) in dessen Ausgangsposition sichernde lösbare Kupplungsvorrichtung (35) vorhanden sind, **dadurch gekennzeichnet, dass** das Führungsteil (20) ein langgestrecktes zylindrisches Bauteil ist, dass auf dem Führungsteil (20) ein das Kopfanlageteil (13) mindestens mittelbar tragendes Schlittenbauteil (23) zwangsgeführt ist, dass der Federspeicher (22) sich entlang des Führungsteils (20) zwischen dem Schlittenbauteil (23) und einem hauptkörperseitigen Widerlager (bei 21) erstreckt, dass das Schlittenbauteil (23) einen Sperrzahn (29) bildet, welcher mit einem am oberen Ende der Ausfahrstrecke (bei S) des Schlittenbauteils (23) angeordneten Gegensperrzahn (Z), eine lösbare Rücklaufsperre bildend, zusammenwirkt, und dass das Schlittenbauteil (23) ein primäres Kupplungselement (39) aufweist, welches in der Ausgangsposition des Schlittenbauteils (23), die lösbare Kupplungsvorrichtung (35) bildend, mit einem vom Hauptkörper (11) gehaltenen sekundären Kupplungselement (37) zusammenwirkt.

2. Kopfstütze nach Anspruch 1, **dadurch gekennzeichnet, dass** sich die Längsachse (L) des Führungsteils (20), zur Vertikalen geneigt, nach oben erstreckt.

3. Kopfstütze nach Anspruch 1 oder nach Anspruch 2, **dadurch gekennzeichnet, dass** das Führungsteil (20) von einem Rohr mit insbesondere kreisförmigem Querschnitt gebildet ist.

4. Kopfstütze nach einem der Ansprüche 1 bis 3, **dadurch gekennzeichnet, dass** der Federspeicher eine insbesondere zylindrische Schraubendruckfeder(22) ist, welche das Führungsteil (20) koaxial umgibt.

5. Kopfstütze nach einem der Ansprüche 1 bis 4, **dadurch gekennzeichnet, dass** sich entlang des Führungsteils (20) ein Steuerorgan (26) erstreckt, dessen Steuerbahn (S) mit dem Sperrzahn (29) kooperiert und deren oberes Ende den Gegensperrzahn (Z) bildet.

6. Kopfstütze nach einem der Ansprüche 1 bis 5, **dadurch gekennzeichnet, dass** das Führungsteil (20) ein mit seiner Fußseite (bei 21) am Hauptkörper (11) gehaltenes stehendes Bauteil ist.

7. Kopfstütze nach Anspruch 6, **dadurch gekennzeichnet, dass** ein Fußteil (21) des Führungsteils (20) schwenkbar gelagert ist, wobei sich die Schwenklagerachse (A) horizontal sowie quer zur Längsachse (L) des Führungsteils (20) erstreckt.

8. Kopfstütze nach einem der Ansprüche 5 oder 6, 7 wenn von Anspruch 5 abhängig, **dadurch gekennzeichnet, dass** die Steuerbahn (S) des Steuerorgans (26) einschließlich der Zahnflanken des Gegensperrzahns (Z) nach vorn in Richtung Kopfanlageteil (13) weist.

9. Kopfstütze nach einem der Ansprüche 5, 8 oder 6, 7 wenn von Anspruch 5 abhängig, **dadurch gekennzeichnet, dass** das Steuerorgan (26), beginnend etwa in Höhe der Fußseite (bei 21) des Führungsteils (20) zunächst eine nach vorn divergierende Anlaufschräge (27) bildet, an welche sich mehrere im wesentlichen der Geometrie des Gegensperrzahns (Z) entsprechende Zwischen-Gegensperrzähne (28) anschließen.

10. Kopfstütze nach Anspruch 8 oder nach Anspruch 9, **dadurch gekennzeichnet, dass** das Schlittenbauteil (23) zwei Sperrzähne (29) aufweist und dass jedem Führungsteil (20) zwei Steuerorgane (26) zugeordnet sind, von denen jedes mit einem Sperrzahn (29) des Schlittenbauteils (23) kooperiert.

11. Kopfstütze nach einem der Ansprüche 1 bis 10, **dadurch gekennzeichnet, dass** der Hauptkörper (11) zwei Führungsteile (20) mit je einem Schlittenbauteil (23) trägt und dass beide Schlittenbauteile (23) mittels eines Brückenbauteils (24) miteinander verbunden sind.

12. Kopfstütze nach Anspruch 11, **dadurch gekennzeichnet, dass** das Brückenbauteil (24) das Kopfanlageteil (13) trägt.

13. Kopfstütze nach einem der Ansprüche 1 bis 12, **dadurch gekennzeichnet, dass** das Kopfanlageteil (13) durch eine Neigeverstelleinrichtung (12) mindestens mittelbar mit dem Schlittenbauteil (23) verbunden ist.

14. Kopfstütze nach Anspruch 12 und nach Anspruch 13, **dadurch gekennzeichnet, dass** das Brückenbauteil (24) die Neigeverstelleinrichtung (12) trägt.

15. Kopfstütze nach Anspruch 13 oder nach Anspruch 14, **dadurch gekennzeichnet, dass** die Neigeverstelleinrichtung von einer Klemmlagerschelle (12) gebildet ist.

16. Kopfstütze nach Anspruch 5 oder nach einem der Ansprüche 6 bis 15 wenn von Anspruch 5 abhängig, **dadurch gekennzeichnet, dass** jedes Schlittenbauteil (23) mittels Federrückstellkraft (bei F) gegen die Steuerbahn (S) des Steuerorgans (26) gehalten wird.

17. Kopfstütze nach Anspruch 16, **gekennzeichnet durch** eine jedes Schlittenbauteil (23) gegen die Steuerbahn (S) des Steuerorgans (26) haltende Bügelfeder (30).

18. Kopfstütze nach Anspruch 17, **dadurch gekennzeichnet, dass** jedes Schlittenbauteil (23) die Druckseite (D) der Bügelfeder (30) mit einem Führungsgleiter oder mit einer Führungsrolle (33) kontaktiert.

19. Kopfstütze nach Anspruch 17 oder nach Anspruch 18, **dadurch gekennzeichnet, dass** die Bügelfeder (30) für jedes Schlittenbauteil (23) eine Ausfahrbegrenzung (34) darstellt.

20. Kopfstütze nach einem der Ansprüche 1 bis 19, **dadurch gekennzeichnet, dass** die lösbare Kupplungsvorrichtung (35) von einem am Schlittenbauteil (23) befestigten Kupplungszapfen (39) als primärem Kupplungselement und von einem etwa haarnadelförmig gekrümmten Kupplungs-Federbügel (37) als sekundärem Kupplungselement gebildet ist, welcher den Kupplungszapfen (39) bei verengter Position des Kupplungs-Federbügels (37) festhält und bei aufgeweiteter Position des Kupplungs-Federbügels (37) freigibt.

21. Kopfstütze nach Anspruch 20, **dadurch gekennzeichnet, dass** zur Betätigung der Kupplungs-Federklammer (37) eine Schaltwippe (38) vorgesehen ist, welche den Kupplungs-Federbügel (37) mittels einer Federrückstellkraft (P) in Schließstellung versetzt und welche mittels eines Antriebsteils (47) entgegen der Federrückstellkraft (P) in die Öffnungsstellung hineinbewegbar ist.

22. Kopfstütze nach Anspruch 21, **dadurch gekennzeichnet, dass** das Schlittenbauteil (23) ein Steuermittel, wie z.B. eine Steuerkante, aufweist, welches beim Abwärtshub des Schlittenbauteils (23), dem Kupplungszapfen (39) vorauseilend; die Schaltwippe (38) für den Durchtritt des Kupplungszapfens (39) durch den Kupplungs-Federbügel (37) in dessen Öffnungssinn beaufschlagt.

23. Kopfstütze nach einem der Ansprüche 21 bis 22, **dadurch gekennzeichnet, dass** die Schaltwippe (38) durch den Stößel (48) einer Antriebseinheit, wie z.B. eines Elektromagneten (47), betätigbar ist.

24. Kopfstütze nach Anspruch 23, **dadurch gekennzeichnet, dass** die Antriebseinheit (47) mittels eines insbesondere von einem Sensor ausgehenden Steuersignals aktivierbar ist.

## Claims

1. Headrest (10) for automobile seats, with a head contact part (13) which is guided relative to a main body (11) of the headrest (10) along a substantially linear direction of movement in a mobile manner with regard to the main body (11), comprises a head contact surface and can move forwards towards the back of the head of the occupant through the release of energy from at least one mechanical spring store (22) which can be stressed contrary to the outward direction of the head contact part (13), wherein a guide part (20) comprising at least one rectilinear guide surface is provided for the substantially linear movement of the head contact part (13), and wherein a return travel lock (29, Z), which prevents an unintended inward movement of the head contact part (13) into its starting position, and a releasable coupling device (35), which secures the head contact part (13) in its starting position, are provided, **characterised in that** the guide part (20) is an elongate cylindrical component, that a slide component (23), which bears the head contact part (13) at least indirectly, is positively guided on the guide part (20), that the spring store (22) extends along the guide part (20) between the slide component (23) and an abutment (at 21) on the main body side, that the slide component (23) forms a locking tooth (29) which interacts with a mating locking tooth (Z) disposed at the top end of the outward travel length (at S) of the slide component (23) to form a releasable return travel lock, and that the slide component (23) comprises a primary coupling element (39) which, when the slide component (23) is in the starting position, interacts with a secondary coupling element (37) held by the main body (11) to form the releasable coupling device (35).

2. Headrest according to Claim 1, **characterised in that** the longitudinal axis (L) of the guide part (20) extends upwards, at an inclination to the vertical.

3. Headrest according to Claim 1 or according to Claim 2, **characterised in that** the guide part (20) is formed by a tube with in particular a circular cross section.

4. Headrest according to any one of Claims 1 to 3, **characterised in that** the spring store is a particularly cylindrical helical compression spring (22) which coaxially surrounds the guide part (20).

5. Headrest according to any one of Claims 1 to 4, **characterised in that** a control member (26) extends along the guide part (20), the control path (S) of which member co-operates with the locking tooth (29) and the top end of which forms the mating locking tooth (Z).

6. Headrest according to any one of Claims 1 to 5, **characterised in that** the guide part (20) is an upright component which is held with its foot side (at 21) on the main body (11).

7. Headrest according to Claim 6, **characterised in that** a foot part (21) of the guide part (20) is pivotably mounted, wherein the pivot bearing axis (A) extends horizontally and transversely to the longitudinal axis (L) of the guide part (20).

8. Headrest according to any one of Claims 5 or 6, 7, if dependent on Claim 5, **characterised in that** the control path (S) of the control member (26), including the tooth flanks of the mating locking tooth (Z), points forwards in the direction of the head contact part (13).

9. Headrest according to any one of Claims 5, 8 or 6, 7, if dependent on Claim 5, **characterised in that**, beginning approximately at the level of the foot side (at 21) of the guide part (20), the control member (26) initially forms a run-up slope (27) which diverges forwards and is adjoined by a plurality of intermediate mating locking teeth (28) corresponding substantially to the geometry of the mating locking tooth (Z).

10. Headrest according to Claim 8 or according to Claim 9, **characterised in that** the slide component (23) comprises two locking teeth (29), and that two control members (26) are associated with each guide part (20), each of which members co-operates with a locking tooth (29) of the slide component (23).

11. Headrest according to any one of Claims 1 to 10, **characterised in that** the main body (11) bears two guide parts (20), each with a slide component (23), and that the two slide components (23) are connected together by means of a bridge component (24).

12. Headrest according to Claim 11, **characterised in that** the bridge component (24) bears the head contact part (13).

13. Headrest according to any one of Claims 1 to 12, **characterised in that** the head contact part (13) is at least indirectly connected to the slide component (23) by a tilt adjustment device (12).

14. Headrest according to Claim 12 and according to Claim 13, **characterised in that** the bridge component (24) bears the tilt adjustment device (12).

15. Headrest according to Claim 13 or according to Claim 14, **characterised in that** the tilt adjustment device (12) is formed by a clamping bearing strap (12).

16. Headrest according to Claim 5 or according to any one of Claims 6 to 15, if dependent on Claim 5, **characterised in that** each slide component (23) is held against the control path (S) of the control member (26) by means of spring restoring force (at F).

17. Headrest according to Claim 16, **characterised by** a stirrup spring (30) which holds each slide component (23) against the control path (S) of the control member (26).

18. Headrest according to Claim 17, **characterised in that** each slide component (23) contacts the pressure side (D) of the stirrup spring (30) with a guide slider or with a guide roller (33).

19. Headrest according to Claim 17 or according to Claim 18, **characterised in that** the stirrup spring (30) represents an outward limit stop (34) for each slide component (23).

20. Headrest according to any one of Claims 1 to 19, **characterised in that** the releasable coupling device (35) is formed by a coupling pin (39) fastened to the slide component (23) as primary coupling element and by a coupling spring stirrup (37) curved approximately in the shape of a hairpin as secondary coupling element, which retains the coupling pin (39) when the coupling spring stirrup (37) is in the narrowed position and releases it when the coupling spring stirrup (37) is in the widened position.

21. Headrest according to Claim 20, **characterised in that** a switching rocker (38) is provided to operate the coupling spring clip (37), which rocker moves the coupling spring stirrup (37) into the closed position by means of a spring restoring force (P) and can move into the open position against the spring restoring force (P) by means of a drive part (47).

22. Headrest according to Claim 21, **characterised in that** the slide component (23) comprises a control means such as, e.g. a control edge, which, when the slide component (23) travels downwards, moving in front of the coupling pin (39), acts on the switching rocker (38) in the opening direction of the coupling spring stirrup (37) for the coupling pin (39) to pass through the latter.

23. Headrest according to any one of Claims 21 to 22, **characterised in that** the switching rocker (38) can be operated by the plunger (48) of a drive unit such as, e.g. of a solenoid (47).

24. Headrest according to Claim 23, **characterised in that** the drive unit (47) can be activated by means of a control signal coming in particular from a sensor.

## Revendications

1. Appui-tête (10) pour sièges de véhicule automobile, avec une partie d'appui de tête (13) présentant une surface d'appui de tête déplaçable par rapport à un corps principal (11) de l'appui-tête (10) le long d'une direction de déplacement sensiblement linéaire, la partie d'appui de tête (13) étant guidée par rapport au corps principal (11) et étant déplaçable vers l'avant, vers l'occiput des passagers du véhicule, au moyen de la décharge d'énergie d'au moins un accumulateur à ressort (22) mécanique, susceptible d'être contraint à l'encontre du sens de déploiement de la partie d'appui de tête (13), une partie de guidage (20), présentant au moins une surface de guidage rectiligne, étant prévue pour le déplacement sensiblement linéaire de la partie d'appui de tête (13), et un verrou de rappel (29, Z), empêchant un déplacement de pénétration intempestif de la partie d'appui de tête (13) à sa position initiale, et un dispositif de couplage (35) désolidarisable, assurant la partie d'appui de tête (13) à sa position initiale, étant prévus, **caractérisé en ce que** la partie de guidage (20) est un composant cylindrique allongé, **en ce qu'**au moins un composant formant chariot (23), portant au moins indirectement la partie d'appui de tête (13), est l'objet d'un guidage forcé sur la partie de guidage (20), **en ce que** l'accumulateur à ressort (22) s'étend le long de la partie de guidage (20), entre le composant formant chariot (23) et un contre-appui (en 21) situé côté corps principal, **en ce que** le composant formant chariot (23) forme une dent de blocage (29) qui coopère, en formant un blocage anti-rappel désolidarisable, avec une dent de blocage conjuguée (Z) disposée sur l'extrémité supérieure de la course de déploiement (en S) du composant formant chariot (23), et **en ce que** le composant formant chariot (23) présente un élément de couplage primaire (39), coopérant, en formant le dispositif de couplage (35) désolidarisable, lorsque le composant formant chariot (23) est en position initiale, avec un élément de couplage secondaire (37), maintenu par le corps principal (11).

2. Appui-tête selon la revendication 1, **caractérisé en ce que** l'axe longitudinal (L) de la partie de guidage (20) s'étend vers le haut, en étant incliné par rapport à la verticale.

3. Appui-tête selon la revendication 1 ou selon la revendication 2, **caractérisé en ce que** la partie de guidage (20) est formée par un tube ayant une section transversale en particulier en forme de cercle.

4. Appui-tête selon l'une des revendications 1 à 3, **caractérisé en ce que** l'accumulateur à ressort est un ressort de compression hélicoïdal (22), en particulier cylindrique, qui entoure coaxialement la partie de guidage (20).

5. Appui-tête selon l'une des revendications 1 à 4, **caractérisé en ce que** le long de la partie de guidage (20) s'étend un organe de commande (26), dont la piste de commande (S) coopère avec la dent de blocage (29) et dont l'extrémité supérieure forme la dent de blocage conjuguée (Z).

6. Appui-tête selon l'une des revendications 1 à 5, **caractérisé en ce que** la partie de guidage (20) est un composant stationnaire, maintenu sur le corps principal (11) par sa face de pied (en 21).

7. Appui-tête selon la revendication 6, **caractérisé en ce qu'**une partie de pied (21) de la partie de guidage (20) est montée à pivotement, l'axe de palier de pivotement (A) s'étendant horizontalement ainsi que transversalement par rapport à l'axe longitudinal (L) de la partie de guidage (20).

8. Appui-tête selon l'une des revendications 5 ou 6, 7 lorsqu'elle dépend de la revendication 5, **caractérisé en ce que** la piste de commande (S) de l'organe de commande (26), y compris des flancs de dent de la dent de blocage conjuguée (Z), est tournée vers l'avant en direction de la partie d'appui de tête (13).

9. Appui-tête selon l'une des revendications 5, 8 ou 6, 7 lorsqu'elle dépend de la revendication 5, **caractérisé en ce que** l'organe de commande (26), en commençant à peu près à hauteur de la face de pied (en 21) de la partie de guidage (20), forme d'abord une pente de franchissement (27) divergeant vers l'avant, à laquelle se raccordent plusieurs dents de blocage conjuguées intermédiaires (28), correspondant sensiblement à la géométrie de la dent de blocage conjuguée (Z).

10. Appui-tête selon la revendication 8 ou selon la revendication 9, **caractérisé en ce que** le composant formant chariot (23) présente deux dents de blocage (29), et **en ce qu'**à chaque partie de guidage (20) sont associés deux organes de commande (26), dont chacun coopère avec une dent de blocage (29) du composant formant chariot (23).

11. Appui-tête selon l'une des revendications 1 à 10, **caractérisé en ce que** le corps principal (11) porte deux parties de guidage (20) ayant chacune un composant formant chariot (23), et **en ce que** les deux composants formant chariot (23) sont reliés ensemble au moyen d'un composant formant pont (24).

12. Appui-tête selon la revendication 11, **caractérisé en ce que** le composant formant pont (24) porte la partie d'appui de tête (13).

13. Appui-tête selon l'une des revendications 1 à 12, **caractérisé en ce que** la partie d'appui de tête (13) est reliée, au moins indirectement, au composant formant chariot (23) au moyen d'un dispositif de réglage d'inclinaison (12).

14. Appui-tête selon la revendication 12 et selon la revendication 13, **caractérisé en ce que** le composant formant pont (24) porte le dispositif de réglage d'inclinaison (12).

15. Appui-tête selon la revendication 13 ou selon la revendication 14, **caractérisé en ce que** le dispositif de réglage d'inclinaison est formé par un collier de palier de serrage (12).

16. Appui-tête selon la revendication 5 ou selon l'une des revendications 6 à 15, lorsqu'elle dépend de la revendication 5, **caractérisé en ce que** chaque composant formant chariot (23) est maintenu (en F) contre la piste de commande (S) de l'organe de commande (26) à l'aide d'une force de rappel élastique.

17. Appui-tête selon la revendication 16, **caractérisé par** un ressort à branche (30), maintenant chaque composant formant chariot (23) contre la piste de commande (S) de l'organe de commande (26).

18. Appui-tête selon la revendication 17, **caractérisé en ce que** chaque composant formant chariot (23) met en contact le face de pressage (D) du ressort à branche (30) avec un coulisseau de guidage ou avec un galet de guidage (33).

19. Appui-tête selon la revendication 17 ou selon la revendication 18, **caractérisé en ce que** le ressort à branche constitue une limitation de déploiement (34) pour chaque composant formant chariot (23).

20. Appui-tête selon l'une des revendications 1 à 19, **caractérisé en ce que** le dispositif de couplage (35) désolidarisable est formé par un tourillon de couplage (39) fixé au composant formant chariot (23), faisant office d'élément de couplage primaire, et par une branche de ressort de couplage (37) incurvée à peu près en forme d'épingle à cheveux, faisant office d'élément de couplage secondaire, maintenant fixé le tourillon de couplage (39) lorsque la branche de ressort de couplage (37) est en position contractée et le libérant lorsque la branche de ressort de couplage (37) est en position élargie.

21. Appui-tête selon la revendication 20, **caractérisé en ce que**, pour l'actionnement de la pince élastique de couplage (37), est prévue une bascule de commutation (38), qui place la branche de ressort de couplage (37) en position de fermeture au moyen d'une force de rappel élastique (P) et qui est susceptible d'être passée à la position d'ouverture au moyen d'une partie d'entraînement (47) à l'encontre de la force de rappel élastique (P).

22. Appui-tête selon la revendication 21, **caractérisé en ce que** le composant formant chariot (23) présente un moyen de commande, tel que, par exemple, une arête de commande, qui, lors de la course de descente du composant formant chariot (23), en précédant cinématiquement le tourillon de couplage (39), sollicite la bascule de commutation (38) pour le passage du tourillon de couplage (39) dans son sens d'ouverture au moyen de la branche de ressort de couplage (37).

23. Appui-tête selon l'une des revendications 21 à 22, **caractérisé en ce que** la bascule de commutation (38) est susceptible d'être actionnée par le poussoir (48) d'une unité d'entraînement, telle que, par exemple, un électroaimant (47).

24. Appui-tête selon la revendication 23, **caractérisé en ce que** l'unité d'entraînement (47) est activable au moyen d'un signal de commande partant en particulier d'un capteur.
